# EUROPÄISCHE PATENTSCHRIFT

(11) **EP 1 077 596 B1**
(45) Veröffentlichungstag und Bekanntmachung des Hinweises auf die Patenterteilung: **19.09.2001**
(21) Anmeldenummer: 99924857.8
(22) Anmeldetag: 30.04.1999
(51) Int. Cl.: A01G 3/02

(54) **GARTENSCHERE MIT EINEM SCHNEIDBLATT UND EINEM HIERMIT ZUSAMMENWIRKENDEN AMBOSS**
SECATEURS WITH A CUTTER BLADE AND AN ANVIL WHICH INTERACTS WITH THE CUTTER BLADE
SECATEUR COMPORTANT UNE LAME DE COUPE ET UNE ENCLUME COOPERANT AVEC LADITE LAME

(30) Priorität: 15.05.1998 DE 19821924
(43) Veröffentlichungstag der Anmeldung: 28.02.2001
(73) Patentinhaber: Wolf-Garten GmbH & Co. KG, 57518 Betzdorf (DE)
(72) Erfinder: SCHNEIDER, Manfred, D-66606 St. Wendel (DE)
(74) Vertreter: Koch, Günther, Dipl.-Ing.
(86) Internationale Anmeldenummer: EP9902962
(87) Internationale Veröffentlichungsnummer: WO9959396

(56) Entgegenhaltungen:
- US-A- 2 821 018
- US-A- 3 372 478
- US-A- 5 272 810

## Beschreibung

Die Erfindung bezieht sich auf eine Gartenschere gemäß dem Oberbegriff des Anspruchs 1. Bei der Herstellung derartiger Gartenscheren besteht das Problem der Ausrichtung zwischen Schneidkante und Amboßfläche. Bei geschlossener Schere soll die Schneidkante des Schneidblattes über ihre gesamte Länge auf der Amboßfläche derart aufliegen, daß dazwischen kein Lichtspalt erkennbar ist. Diese Bedingung ist toleranzbedingt fertigungsmäßig nicht auf einfache Weise zu erfüllen, so daß in der Regel Nachjustierungen erforderlich sind, um die Schneidkante parallel zur Amboßfläche einzustellen. Es hat sich in der Praxis gezeigt, daß fertigungsmäßig ein Winkel von 1° zwischen Schneidkante und Amboßfläche nach beiden Seiten von der Null-Linie vorhanden sein kann.

Eine Justierung durch Biegung der Scherenteile ist schwierig und erfordert fachkundige Erfahrung und ist dabei sehr zeitaufwendig.

Zur Vereinfachung der Justierung ist es bekannt, den Amboß (oder das Schneidblatt) gegenüber dem tragenden Scherenschenkel über eine Kulissenführung einstellbar zu machen, wobei die Fixierung der beiden Teile durch eine Schrauben-Mutter-Verspannung erfolgt.

Die US-PS 3 372 478 zeigt eine solche Anordnung, bei der der Amboß mit einer gekrümmten Auflagefläche ausgestattet ist, die auf einer entsprechend gekrümmten Auflagefläche des den Amboß tragenden Scherenschenkels reitet. Die Befestigung des Amboß am Scherenschenkel erfolgt über eine Spannschraube.

Bei einer Gartenschere gemäß der US-A-2 528 815 ist der Amboß in einer Kulissenführung verschiebbar und gegen Stiftanschläge abgestützt. Die Festklemmung erfolgt über eine Spannschraube, die durch einen die Einstellung ermöglichenden Langlochschlitz einsteht.

Gemäß der EP-A-0 527 358 besteht die Kulisseneinstellvorrichtung aus zwei Langlöchern, die gegenüber der Schneidkante in entgegengesetzter Neigung angestellt sind und die von Amboßhülsen durchsetzt sind, in die Schrauben unter Festklemmung des Amboß einschraubbar sind.

Die US-PS 2 821 018 zeigt eine gattungsgemäße Gartenschere, bei der ein abnehmbarer Amboß einstellbar mit zwei Schrauben am Scherenschenkel festlegbar ist, wobei die Einstellung derart erfolgen kann, daß die Schneide des Schneidblattes eine durchgehende Linienberührung mit dem Amboß herstellt, wenn die Schenkel geschlossen sind. Wie bei den anderen vorstehend beschriebenen bekannten Gartenscheren erfolgt auch hier die Festlegung reibungsschlüssig.

All diese Justiervorrichtungen ermöglichen eine exakte lichtspaltfreie Einstellung zwischen Amboß und Schneidkante. Eine zuverlässige Einhaltung der einjustierten Stellung ist jedoch nicht immer gewährleistet. Wenn die Schraube nicht fest genug in die Gegenmutter eingeschraubt ist oder sich lockert oder aus anderen Gründen der durch die Verspannung bewirkte Reibungsschluß zwischen Amboß und Scherenschenkel nicht ausreicht, um den auftretenden Kräften zu widerstehen, dann kann eine Winkelverstellung nicht ausgeschlossen werden, was zu einem keilförmigen Lichtspalt in der einen oder anderen Richtung führt.

Derartige Gartenscheren sind den unterschiedlichsten Beanspruchungen unterworfen in Abhängigkeit davon, wo beispielsweise ein zu schneidender Ast auf dem Amboß zu liegen kommt und ob dieser Ast senkrecht zur Schneide oder schräg hierzu verläuft, während der Schnitt durchgeführt wird. Aus diesem Grunde können Beanspruchungen auftreten, die eine Gleitbewegung zur Folge haben.

Der Erfindung liegt die Aufgabe zugrunde, eine gattungsgemäße Gartenschere derart auszubilden, daß die eingestellte Justierlage zwischen Scherenblatt oder Schneidblatt und Amboß auch bei erheblichen und ungewöhnlichen Beanspruchungen erhalten bleibt.

Gelöst wird die gestellte Aufgabe durch die im Kennzeichnungsteil des Patentanspruchs 1 angegebenen Merkmale. Dadurch, daß sich die Mutter mit ihrer Ringschneide in den im allgemeinen aus Aluminium bestehenden Amboß eingräbt, wird eine formschlüssig wirkende Nut-Feder-Verbindung erreicht, die eine gegenseitige Verschiebung auch bei höchster Beanspruchung ausschließt.

Die Einstellmöglichkeit zwischen Amboß und Scherenblatt kann auf verschiedene Weise erfolgen, beispielsweise über zwei Langlöcher, die gegenüber der Schneidkante mit entgegengesetzter Neigung angestellt sind und die von den Klemmschrauben durchsetzt werden, wie dies beispielsweise bei der EP-A-0 527 358 der Fall ist.

Gemäß der bevorzugten Ausführung der Erfindung sind zwei Normschrauben vorgesehen, von denen die eine durch eine als Schwenklager ausgeführte Büchse (geringes Spiel, keine Belastung auf das Gewinde) wirkt und die andere in einem hierzu konzentrischen Kreisbogenschlitz wirkt und automatisch an einer durch die Justierung beim Schließen der Schere bedingten Stelle mit ihrer Schneidmutter formschlüssig festlegbar ist. Gemäß der bevorzugten Ausführungsform ist der Bogenschlitz in dem aus Aluminium bestehenden Amboß angebracht, während die Schneidmutter verdrehfest in dem aus gehärtetem Stahl bestehenden Scherenschenkel eingesetzt ist.

Unter Anwendung des Erfindungsprinzips sind demgemäß verschiedene Versionen denkbar, die den einen Gedanken des Einschneidens bzw. Eindrückens einer Ringschneide gemeinsam haben und sämtlich vom Schutz mit umfaßt werden sollen.

Nachstehend wird ein Ausführungsbeispiel der Erfindung anhand der Zeichnung beschrieben. In der Zeichnung zeigen:
Fig. 1 ist eine Ansicht einer geschlossenen Gartenschere gemäß der Erfindung;
Fig. 2 ist ein Schnitt nach der Linie II-II gemäß Fig. 1;
Fig. 3 zeigt in größerem Maßstab die Verbindung zwischen Scherenschenkel und Amboß;
Fig. 4 zeigt den in Fig. 3 mit einem Kreis umschlossenen Bereich in einem noch größeren Maßstab.

Die Erfindung kann bei allen Scheren, auch Astscheren, Verwendung finden, bei denen es darauf ankommt, die beiden Schneidkörper im geschlossenen Zustand der Schere spaltfrei aneinanderzufügen.

Gemäß dem dargestellten Ausführungsbeispiel weist die Schere zwei über eine Lagerschraube 10 schwenkbar miteinander verbundene Scherenschenkel 12 und 14 auf, die auf der Griffseite Griffschalen 16 bzw. 18 tragen. Der erste Scherenschenkel 14 trägt ein fest mit ihm verbundenes Schneidblatt 20, und der zweite Scherenschenkel 12 trägt über eine einstellbare Justiervorrichtung den Amboß 22. Im geschlossenen Zustand der Schere soll das Schneidblatt mit seiner Schneidkante 24 der Amboßfläche über die gesamte Länge spaltfrei anliegen.

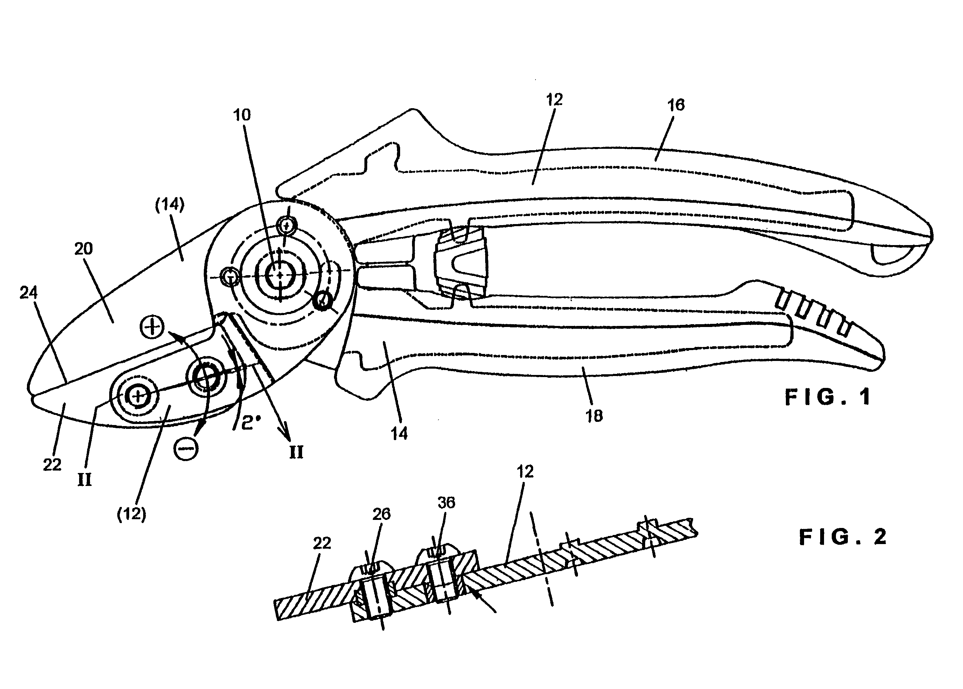

Zum Ausgleich fertigungsbedingter Toleranzen und zur lichtspaltfreien Amboßeinstellung dient die in den Fig. 2 bis 4 im einzelnen dargestellte Vorrichtung.

Eine erste Schraube 26 ist durch eine Bohrung 28 des Amboß 22 und durch eine Lagerbuchse 34 geführt und in ein Gewindeloch 30 des aus Stahl bestehenden zweiten Scherenschenkels 12 eingeschraubt. Die Lagerbuchse 34 aus Stahl liegt in einer Ausdrehung des Scherenschenkels 12 bzw. einer hiermit fluchtenden Ausdrehung des Amboß 22. Diese Lagerbuchse bildet die Schwenkachse 32 für den Amboß 22 mit sehr geringen radialen Toleranzen.

Eine zweite Schraube 36 steht mit ihrem Schaft 38 durch einen Bogenschlitz 40 hindurch, der im Amboß 22 konzentrisch zur Schwenkachse 32 über einen Winkelbereich von 2° angeordnet ist. In einem Loch 42 des zweiten Scherenschenkels 12 ist drehfest eine Schneidmutter 44 eingesetzt. Diese Mutter 44 besitzt seitliche Abflachungen, die an seitlichen Abflachungen des Loches 42 anliegen und die Mutter 44 an einer Drehung gegenüber dem zweiten Scherenschenkel 12 hindern. In diese Mutter 44 ist der Gewindeschaft 38 der zweiten Schraube 36 eingeschraubt, die sich mit ihrem Schraubenkopf 46 auf der Oberseite des Amboß 22 abstützt und einen Innensechskant aufweist. Die Schneidmutter 44 trägt an ihrer dem Amboß 22 zugewandten Stirnringfläche eine Ringschneide 48, die sich beim Anziehen der Schraube 36 in den aus Aluminium bestehenden Amboß 22 eingräbt und mit der durch die Schneide gebildeten Ringnut im Amboß eine formschlüssige Verbindung zwischen dem zweiten Scherenschenkel 12 und dem Amboß 22 herstellt. Die Fertigung der Mutter als Drehteil und der Einbau in ein "Fein"-gestanztes Loch ergeben auch hier sehr geringe Toleranzen.

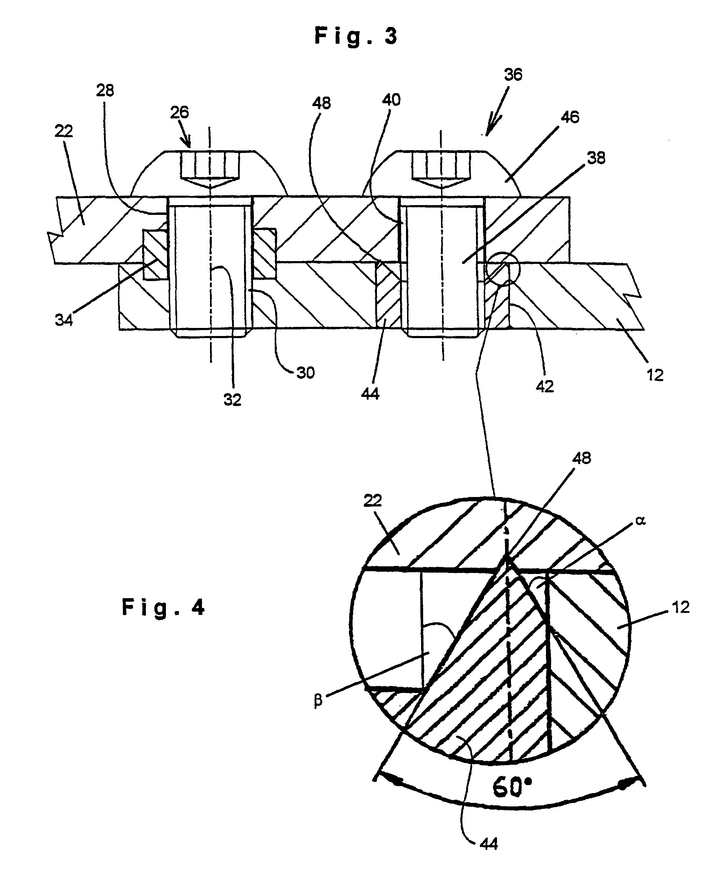

Die Ringschneide 48 sollte im Winkel zur Achse eine Symmetrie derart aufweisen, daß sich die Kräfte beim Eindringen in das Aluminium gegenseitig aufheben. Die Winkel α und β betragen ca. 30°. Wie insbesondere aus Fig. 4 ersichtlich, liegt die Ringschneide 48 im äußeren Mittelbereich der Stirnringfläche, wodurch ein Abkippen der Schneide beim Anziehen verhindert wird.

Zur Justierung wird der Amboß 22 um die Achse 32 auf der Buchse 34 beim Schließen der Schere verschwenkt bis die Amboßfläche an der Schneidkante 24 lichtspaltfrei anliegt. Dann werden die Schrauben 26 und 36 über ihren Innensechskant angezogen. Dabei gräbt sich die Ringschneide 48 in den Amboß ein und bildet eine formschlüssige Abstützung, so daß sich der Amboß nicht weiter um die Achse 32 verschwenken kann. Diese lichtspaltfreie Einstellung bleibt dauerhaft erhalten.

Anstatt die Mutter 44 mit einer Ringschneide 48 zu versehen oder zusätzlich hierzu kann auch der Schraubenkopf 46 der Schraube 36 an seiner dem Amboß 22 zugewandten Stirnseite mit einer Ringschneide versehen sein. Anstelle einer glatten Ringschneide 48 kann auch eine gezahnte Ringschneide vorgesehen werden.

### Bezugszeichenliste

- 10: Lagerschraube
- 12: Scherenschenkel
- 14: Scherenschenkel
- 16: Griffschale
- 18: Griffschale
- 20: Schneidblatt
- 22: Amboß
- 24: Schneidkante
- 26: erste Schraube
- 28: Bohrung
- 30: Gewindeloch
- 32: Schwenkachse
- 34: Lagerbuchse
- 36: zweite Schraube
- 38: Schaft
- 40: Bogenschlitz
- 42: Loch
- 44: Schneidmutter
- 46: Schraubenkopf
- 48: Ringschneide

## Patentansprüche

1. Gartenschere mit einem von einem ersten Scherenschenkel (14) getragenen Schneidblatt (20) und mit einem zweiten, hiermit über eine Lagerschraube (10) verbundenen zweiten Scherenschenkel (12), der einen Amboß (22) trägt, welcher zur lichtspaltfreien Einstellung zwischen der Schneidkante (24) des Schneidblattes (20) und der Amboßfläche gegenüber dem zweiten Scherenschenkel (12) verschwenkbar und mit zwei Schrauben (26, 36) am zweiten Scherenschenkel (12) festklemmbar ist,
**gekennzeichnet durch** die folgenden Merkmale:
- eine erste Schraube (26) ist in einem Lager (34) angeordnet, dessen Achse die Schwenkachse (32) des Amboß (22) bildet;
- eine zweite Schraube (36) ist in eine Mutter (44) eingeschraubt und in einem konzentrisch zur Schwenkachse (32) verlaufenden Bogenschlitz (40) geführt;
- zwischen der Mutter (44) und dem Kopf (46) der zweiten Schraube (36) ist der Amboß (22) einspannbar;
- die dem Amboß (22) zugewandte Stirnringfläche der Mutter (44) und/oder die dem Amboß (22) zugewandte Stirnringfläche des Kopfes (46) der zweiten Schraube (36) ist als Ringschneide (48) ausgebildet, die sich beim Anziehen der Schraubverbindung (36, 44) in die anliegende Oberfläche des Amboß (22) unter Herstellung eines Formschlusses eingräbt.

2. Gartenschere nach Anspruch 1,
**dadurch gekennzeichnet, daß** die Mutter (44) drehfest in ein Loch (42) des zweiten Scherenschenkels (12) eingesetzt ist und der Schaft (38) der zweiten Schraube (36) durch den Bogenschlitz (40) des Amboß (22) hindurchsteht.

3. Gartenschere nach Anspruch 1,
**dadurch gekennzeichnet, daß** die Ringschneide (48) im äußeren Mittelbereich der Stirnringfläche von Mutter (44) und/oder Schraubenkopf (46) angeordnet ist.

4. Gartenschere nach Anspruch 3,
**dadurch gekennzeichnet, daß** sich die Ringschneide (48) von ihrem Scheitel symmetrisch nach beiden Seiten erstreckt und der Schneidwinkel etwa 60° beträgt.

5. Gartenschere nach Anspruch 1,
**dadurch gekennzeichnet, daß** die erste Schraube (26) in ein Gewindeloch (30) des aus gehärtetem Stahlblech bestehenden Scherenschenkels (12) eingeschraubt ist und mit ihrem Kopf gegen den Amboß (22) anziehbar ist.

6. Gartenschere nach Anspruch 1,
**dadurch gekennzeichnet, daß** das Lager der ersten Schraube (26) aus einer Lagerbuchse (34) besteht, die in eine Ringausdrehung von Amboß (22) und zweitem Scherenschenkel (12) eingesetzt ist.

7. Gartenschere nach einem der Ansprüche 1 bis 6,
**dadurch gekennzeichnet, daß** die Ringschneide (48) glatt ausgebildet ist.

8. Gartenschere nach einem der Ansprüche 1 bis 6,
**dadurch gekennzeichnet, daß** die Ringschneide (48) gezahnt ausgebildet ist.

## Claims

1. Garden pruner having a blade (20) carried by a first pruner leg (14) and having a second pruner leg (12) connected to said blade via a bearing screw (10), said second pruner leg (12) bearing an anvil (22) which, in order to obtain a chink-free adjustment between the cutting edge (24) of the blade (20) and the anvil surface, is being adapted to be pivoted relative to the second pruner leg (12) and to be clamped to the second pruner leg (12) by two screws (26, 36),
**characterised by** the following features:
- a first screw (26) is arranged in a bearing (34), the axis of which forms the pivot axis (32) of the anvil (22);
- a second screw (36) is screwed into a nut (44) and guided in an arcuate slot (40) running concentrically to the pivot axis (32);
- the anvil (22) is adapted to be clamped between the nut (44) and the head (46) of the second screw (36);
- the front annular face of the nut (44) and/or the front annular face, nearest the anvil (22), of the head (46) of the second screw (36) is configured in the form of an annular cutter (48) which, as the screwed connection (36, 44) is being tightened, digs into the contiguous surface of the anvil (22) and produces a form fit.

2. Garden pruner according to claim 1,
**characterised in that** the nut (44) is inserted in a non-rotatable manner into a hole (42) in the second pruner leg (12) and the shank (38) of the second screw (36) projects through the arcuate slot (40) of the anvil (22).

3. Garden pruner according to claim 1,
**characterised in that** the annular cutter (48) is arranged in the outer central portion of the front annular surface of the nut (44) and/or screw head (46).

4. Garden pruner according to claim 3,
**characterised in that** the annular cutter (48) extends symmetrically to both sides from its crown and the cutting angle is approximately 60°.

5. Garden pruner according to claim 1,
**characterised in that** the first screw (26) is screwed into a threaded hole (30) in the pruner leg (12) which is made out of hardened steel plate, and is adapted to be tightened by its head against the anvil (22).

6. Garden pruner according to claim 1,
**characterised in that** the bearing of the first screw (26) consists of a bearing bushing (34) which is inserted into an annular turned recess in the anvil (22) and the second pruner leg (12).

7. Garden pruner according to any one of claims 1 to 6,
**characterised in that** the annular cutter (48) is a smooth construction.

8. Garden pruner according to any one of claims 1 to 6,
**characterised in that** the annular cutter (48) is a toothed construction.

## Revendications

1. Sécateur comprenant une lame de coupe (20) portée par une première branche (14), et une seconde branche (12) reliée à la branche précitée par l'intermédiaire d'une vis de montage (10), et portant une enclume (22) qui peut pivoter vis-à-vis de la seconde branche (12) du sécateur, en vue d'un réglage exempt d'interstices entre le tranchant (24) de la lame de coupe (20) et la surface de l'enclume, et qui peut être coincée fermement sur la seconde branche (12) du sécateur, à l'aide de deux vis (26, 36),
**caractérisé par** les particularités suivantes :
- une première vis (26) est logée dans une portée (34) dont l'axe forme l'axe de pivotement (32) de l'enclume (22) ;
- une seconde vis (36) est vissée dans un écrou (44) et est guidée dans une fente curviligne (40) s'étendant concentriquement à l'axe de pivotement (32) ;
- l'enclume (22) peut être enserrée entre l'écrou (44) et la tête (46) de la seconde vis (36) ;
- la face extrême annulaire de l'écrou (44), tournée vers l'enclume (22), et/ou la face extrême annulaire de la tête (46) de la seconde vis (36), tournée vers ladite enclume (22), est réalisée sous la forme d'un tranchant annulaire (48) qui "mord" dans la surface adjacente de l'enclume (22), lors du blocage de la solidarisation vissée (36, 44), en instaurant un assemblage par concordance de formes.

2. Sécateur selon la revendication 1,
**caractérisé par** le fait que l'écrou (44) est inséré, avec verrouillage antirotation, dans un trou (42) de la seconde branche (12) du sécateur, et la tige (38) de la seconde vis (36) traverse la fente curviligne (40) de l'enclume (22).

3. Sécateur selon la revendication 1,
**caractérisé par** le fait que le tranchant annulaire (48) est disposé dans la région médiane extérieure de la face extrême annulaire de l'écrou (44) et/ou de la tête (46) de la vis.

4. Sécateur selon la revendication 3,
**caractérisé par** le fait que le tranchant annulaire (48) s'étend symétriquement vers les deux côtés, à partir de son sommet, et l'angle de coupe mesure environ 60°.

5. Sécateur selon la revendication 1,
**caractérisé par** le fait que la première vis (26) est vissée dans un trou taraudé (30) de la branche (12) du sécateur qui est constituée par de la tôle d'acier trempé, et peut être bloquée contre l'enclume (22) par sa tête.

6. Sécateur selon la revendication 1,
**caractérisé par** le fait que la portée de la première vis (26) se présente comme une douille de portée (34), logée dans un alésage annulaire ménagé par tournage dans l'enclume (22) et dans la seconde branche (12) du sécateur.

7. Sécateur selon l'une des revendications 1 à 6,
**caractérisé par** le fait que le tranchant annulaire (48) est de réalisation lisse.

8. Sécateur selon l'une des revendications 1 à 6,
**caractérisé par** le fait que le tranchant annulaire (48) est de réalisation dentée.
